# NEUE EUROPÄISCHE PATENTSCHRIFT

(11) **EP 2 722 225 B2**
(45) Veröffentlichungstag und Bekanntmachung des Hinweises auf die Entscheidung über den Einspruch: **02.11.2022**
(45) Hinweis auf die Patenterteilung: 05.07.2017
(21) Anmeldenummer: 13189045.1
(22) Anmeldetag: 17.10.2013
(51) Int. Cl.: B60P 3/36, B62D 25/20, B62D 29/04

(54) **Fahrgestell eines Reisewohnmobils oder ähnlicher Fahrzeuge sowie Chassis für ein solches Fahrgestell**
Frame of a motor home or similar vehicles and chassis for such a frame
Bâti d'un camping-car ou de véhicules similaires et châssis pour un tel bâti

(30) Priorität: 19.10.2012 DE 102012219110
(43) Veröffentlichungstag der Anmeldung: 23.04.2014
(73) Patentinhaber: Fahrzeugbau Meier GmbH, 90518 Altdorf b. Nürnberg - Ludersheim (DE)
(72) Erfinder: Schlick, Wolfgang, 88299 Leutkirch (DE)
(74) Vertreter: FDST Patentanwälte

(56) Entgegenhaltungen:
- EP-A1- 2 360 082
- WO-A1-2004/000633
- CA-A1- 2 625 424
- DE-A1- 4 133 401
- DE-A1- 19 748 894
- DE-A1- 19 748 894
- DE-A1-102011 106 603
- DE-U1- 8 232 306
- DE-U1- 29 912 384
- DE-U1-202010 008 375

## Beschreibung

Die Erfindung betrifft ein Fahrgestell eines Reisewohnmobils oder eines ähnlichen Fahrzeuges mit einem Triebkopf (Fahrerhaus) und einem daran anschließenden Chassis, auf dem beim fertigen Fahrzeug im normalen Betriebszustand ein Aufbau aufgebaut ist.

Reisewohnmobile werden heutzutage üblicherweise auf Basis von Serienfahrzeugen der Transporterklasse (bis 3,5 t zulässiges Gesamtgewicht) oder auch der LKW-Klasse (Gewichtsklasse 3,5 bis 7,5 t oder auch darüber) aufgebaut. Hierzu wird üblicherweise auf dem Fahrgestell des Serienfahrzeuges der eigentliche Aufbau für das Reisewohnmobil vorgenommen.

Bei sogenannten integrierten Fahrzeugen ist die Fahrerzelle des Führerhauses mit in den Wohnraum integriert, indem Fahrersitz und Beifahrersitz drehbar ausgebildet sind. Hierzu ist ein ebener, durchgehender Wohnraumboden üblich. Ein Reisewohnmobil mit den Merkmalen des Oberbegriffs des Anspruchs 1 ist beispielsweise zu entnehmen aus der DE 10 2010 009 611.

Das Chassis der Serienfahrzeuge, auf denen der Aufbau erfolgt, sind üblicherweise gebildet durch einen Leiterrahmen mit in Fahrzeuglängsrichtung verlaufenden Metall-Profilträgern, beispielsweise C-Profilträger, die frontseitig mit dem Triebkopf verbunden sind und an denen die Hinterachse sowie sonstige tragende Bauteile befestigt sind. Aufgrund der erforderlichen Tragkraft weisen diese Profile üblicherweise eine Höhe von beispielsweise etwa 20 cm auf. Auf diesen Profilen wird ein erster Boden aufgebracht, der vom eigentlichen Niveau des Wohnraumbodens nach unten abgesetzt ist, so dass ein Zwischenraum gebildet ist, welcher als Stau- und Versorgungsraum genutzt wird. Derartige Konstruktionen werden auch als Doppelboden bezeichnet. Die freie Innenhöhe dieses Zwischenraums liegt hierbei typischerweise lediglich im Bereich von etwa 10 cm bis 30 cm.

Bei den kleineren Gewichtsklassen, insbesondere der Gewichtsklasse bis 3,5 t sind aufgrund der Gewichtsbeschränkung regelmäßig nur kleinere Fahrzeuge möglich. Generell wird daher eine möglichst leichte Bauweise angestrebt, um innerhalb der begrenzten Gewichtsklasse einen möglichst großen Komfort dem Benutzer zur Verfügung zu stellen. Dies gilt auch für weitere Fahrzeuge, die insbesondere zum Transport von Personen ausgebildet sind, wie beispielsweise Krankentransportfahrzeuge. Auch bei diesen ist die Gewichtsklasse von 3,5 t relevant, um das Fahrzeug mit einem PKW Führerschein fahren zu können. Gleiches gilt auch für weitere Einsatzfahrzeuge, die mit technischem Equipment ausgestaltet sind (Feuerwehr, THW).

Aus der DE 197 48 894 A1 ist ein Wonmobil mit einem Funktionsboden zu entnehmen, welcher zur Ausbildung von Stauräumen eingezogene Vertiefungen aufweist. Der Funktionsboden ist beispielsweise als ein faserverstärktes Kunststoff-Gußformteil oder als ein thermoplastisches Tiefziehformteil ausgebildet.

Aus der WO 2004/000633 A1 ist weiterhin eine wannenförmige Platform aus faserverstärktem Kunststoff für einen Bus zu entnehmen.

Ausgehend hiervon liegt der vorliegenden Erfindung die Aufgabe zugrunde, ein Reisewohnmobil insbesondere der Gewichtsklasse bis 3,5 t zu ermöglichen, welches im Vergleich zu den auf dem Markt befindlichen, bekannten Reisewohnmobilen einen erhöhten Komfort anbietet und insbesondere mehr Zuladung oder bei gleichem Gewicht einen längeren Aufbau ermöglicht.

Die Aufgabe wird gemäß der Erfindung gelöst durch ein Fahrgestell für ein Reisewohnmobil oder für ein ähnliches Fahrzeug mit einem Triebkopf und einem daran anschließenden Chassis, auf dem beim fertigen Fahrzeug (Reisewohnmobil) ein Aufbau aufgebaut ist. Das Chassis bildet als tragende Struktur eine Tragwanne mit einem Unterboden und einer umlaufenden Seitenwandung aus. Der Innenraum der Tragwanne ist dabei als Stauraum für die Anordnung von Versorgungskomponenten wie beispielsweise Wassertanks, Gasflaschen, Batterien usw. ausgebildet. Die Tragwanne ist insgesamt weiterhin von einer einen Boden bildenden Bodenplatte überspannt, die an der Tragwanne auf deren oberen stirnseitigen umlaufenden Rand befestigt ist, insbesondere verklebt oder auch verschraubt. Unter umlaufende Seitenwandung wird hierbei insbesondere verstanden, dass die Seitenwandung den Innenraum sowohl in Querrichtung als auch in Längsrichtung vorzugsweise vollständig umlaufend begrenzt und allenfalls in Teilbereichen oder durch Ausschnitte unterbrochen ist. Durch die wannenförmige Ausgestaltung insbesondere mit der überspannenden Bodenplatte wird insgesamt eine sehr hohe Steifigkeit und Festigkeit erreicht.

Das Fahrgestell ist auch für ähnliche Fahrzeuge eingesetzt, insbesondere Einsatzfahrzeuge, mit denen Personen und / oder technische Ausrüstungsgegenstände transportiert werden (Krankentransportfahrzeuge, Feuerwehr, THW...). Diese Fahrzeuge sind Umbauten von Serienfahrzeugen der Transporterklasse. Die Ausrüstungsgegenstände bilden dann die in der Tragwanne verstauten Versorgungskomponenten, wie zum Beispiel Gasflaschen, Schläuche, Pumpen etc.

Anstelle der bisherigen C-förmigen Tragprofile, auf denen der erste Boden aufgebracht wurde, wird nunmehr daher ein insgesamt wannenförmiges Gebilde als Chassis eingesetzt, welches die erforderlichen Traglasten aufnimmt. Dies sind insbesondere die Befestigung und Verbindung zum Triebkopf hin und weiterhin auch die Befestigung der hinteren Radachse. Als Triebkopf wird daher vorzugsweise weiterhin der Triebkopf des Serienfahrzeuges herangezogen.

In alternativer zweckdienlicher Ausgestaltung ist der Monoblock aus Faserverbundwerkstoff zugleich auch als Tragstruktur für den Triebkopf ausgebildet. Das Faserverbund-Bauteil ist also bis in den Triebkopf hinein fortgeführt. An dem Faserverbund-Bauteil sind dann die entsprechenden lasttragenden Bauteile des Triebkopfs, nämlich insbesondere die Vorderachse, der Motorblock sowie weiterhin die Sitzbefestigungen und gegebenenfalls auch Befestigungen für das Armaturenbrett angeordnet. Das Faserverbund-Bauteil bildet daher vorzugsweise eine über die gesamte Länge des Fahrzeugs durchgehende Bodengruppe.

Durch den Verzicht auf den Stahl-Leiterrahmen und dessen Ersetzung durch die Tragwanne wird der besondere Vorteil erzielt, dass der untere Boden deutlich weiter nach unten in Richtung zur Fahrbahn versetzt wird, so dass sich der Zwischenraum zwischen diesem unteren Boden und dem eigentlichen Wohnraumboden deutlich vergrößert, so dass der Stauraum vergrößert ist.

Durch diese Maßnahme können deutlich mehr Versorgungskomponenten in diesen Zwischenraum integriert werden, so dass im eigentlichen Wohnraum mehr Raum zur Verfügung steht, ohne dass beispielsweise die Aufbauhöhe oder die Fahrzeuglänge insgesamt vergrößert werden müsste. Durch die wannenförmige Ausgestaltung ist darüber hinaus eine ausreichende Stabilität erzielt, um die notwendigen Traglasten aufnehmen zu können.

Ein weiterer entscheidender Vorteil der wannenförmigen Ausgestaltung ist mit der damit einhergehenden Gewichtsreduzierung zu sehen. So reduziert sich im Vergleich zu dem bisherigen Konzept mit dem Leiterrahmen und dem darauf angebrachten Unterboden die Notwendigkeit dieses zusätzlichen Bodens, da dieser gleich Bestandteil des wannenförmigen Tragbauteils ist.

In zweckdienlicher Weiterbildung ist die Tragwanne und bevorzugt das gesamte Chassis nach Art eines Monoblocks ausgebildet und ist insbesondere als ein Faserverbund-Bauteil ausgebildet. Unter Monoblock wird hierbei allgemein verstanden, dass das Wannen-Bauteil ein integrales, einstückiges Teil ist. Die Ausgestaltung als Faserverbund-Bauteil ermöglicht hierbei eine extrem eigensteife Ausgestaltung, so dass hohe Tragkräfte übernommen werden können. Bei dem Faserverbund-Bauteil handelt es sich daher insgesamt um ein laminiertes Bauteil, bei dem der Faserverbundwerkstoff in Kunstharz einlaminierte Tragfasern, vorzugsweise Kohlenstoff-Fasern oder auch für weniger lastbeanspruchte Bereiche Glasfasern aufweist. Bei dem Monoblock-Bauteil handelt es sich daher um ein CFK- und / oder GFK-Bauteil.

Der die Tragwanne überspannende Boden ist insbesondere selbsttragend. Dieser Boden legt bevorzugt den eigentlichen Wohnraumboden des Reisewohnmobils fest, auf dem gegebenenfalls noch ein Bodenbelag aufgebracht ist. Der Innenraum der Tragwanne ist daher nach oben hin von diesem Boden abgeschlossen. Unter selbstragender Boden wird hierbei verstanden, dass die Tragwanne lediglich von der den Boden bildenden Bodenplatte überspannt ist, ohne das zusätzliche Quer- oder Längsstreben auf dem Wannenrand aufgelegt sind.

Dieser selbsttragende Boden ist zweckdienlicherweise als Sandwich-Boden mit einer Isolierung ausgebildet, wobei hierbei zwischen zwei tragenden Decklagen, die insbesondere aus Aluminium oder dem Faserverbund-Werkstoff ausgebildet sind, eine Isolierung eingebracht ist. Dieser Sandwich-Boden weist dabei vorzugsweise eine Dicke im Bereich von 20 bis 45 mm und insbesondere im Bereich von 28 bis 35 mm auf. Die Isolierung ist beispielsweise gebildet durch einen Hartschaum bzw. durch Hartschaumplatten.

Insgesamt ist die Tragwanne für eine winterfeste Ausgestaltung ausgebildet und hierzu zweckdienlicherweise mit einer Isolierung, insbesondere im Unterboden versehen. Bevorzugt ist die Tragwanne vollständig mit der Isolierung versehen. Eine solche Isolierung ist in die Wandung des Faserverbund-Bauteils integriert. Hierunter wird verstanden, dass die Isolierung fest mit der Wandung verbunden ist. Insbesondere ist sie in die Wandung eingebettet, also einlaminiert. Zweckdienlicherweise erfolgt dies sandwichartig, wobei die Isolierung, vorzugsweise ein Hartschaum, zwischen einer inneren und einer äußeren Decklage, insbesondere CFK/GFK Decklage angeordnet ist. Die äußere Decklage ist hierbei vorzugsweise als eine tragende Lage ausgebildet, die eine größere Materialdicke als die innere Lage aufweist. Die äußere Decklage ist dabei beispielsweise etwa 2- bis 3-mal so dick wie die innere Decklage und weist eine Dicke beispielsweise im Bereich von 3 bis 6 mm auf. Die Dicke der Isolierung liegt zwischen 15 und 30 mm und insbesondere bei etwa 20 mm und die innere Decklage weist insbesondere eine Dicke von etwa 1 bis 3 mm auf. Insgesamt ist daher ein asymmetrischer Aufbau der Wandung, also des Unterbodens und gegebenenfalls auch der Seitenwand ausgebildet.

Zwischen dem Unterboden und dem Boden ist insgesamt eine freie Innenhöhe der Tragwanne erhalten, die zumindest 350 mm beträgt und vorzugsweise im Bereich von 380 mm bis 450 mm liegt Entsprechend beträgt die Höhe der Seitenwandung etwa 380 bis etwa 450 mm. Lediglich im Bereich von Anbauten unterhalb des Unterbodens, z.B. im Bereich einer Radachse oder eines Auspuffes ist der freie Innenraum geringer und beträgt z.B. 180mm.

In zweckdienlicher Ausgestaltung bilden die seitlichen Teile der umlaufenden Seitenwandung eine im aufgebauten Endzustand des Reisewohnmobils von außen sichtbare Schürze. Es sind daher in dieser bevorzugten Ausgestaltung keine zusätzlichen Verkleidungselemente mehr vorgesehen. Aufgrund des Verzichts auf separate Verkleidungsbauteile für die Schürze lässt sich beispielsweise bei der Gewichtsklasse von 3,5 t und einer Fahrzeuglänge von etwa 6,5 m bis 7 m bereits etwa 50-60 kg an Gewicht einsparen.

Die sichtbare Seitenwandung ist hierzu zweckdienlicherweise mit einer geeigneten von außen sichtbaren Farbschicht versehen. Dies erfolgt vorzugsweise mit Hilfe eines Gelcoats. Der besondere Vorteil ist hierbei darin zu sehen, dass dieser eine vergleichsweise große Schichtdicke von etwa 0,4 mm aufweist und damit kratzunempfindlich ist, was bei Reisewohnmobilen von besonderem Vorteil ist.

Alternativ hierzu ist seitlich die Seitenwandung der Wanne mit einer eine Schürze bildenden Verkleidung umgeben. Diese ist dabei vorzugsweise an einem umlaufenden Wannenrand der Tragwanne befestigt. Diese Verkleidungsteile bestehen aus Kunststoff, teilweise auch aus Aluminium.

An dem Chassis sind direkt sicherheitsrelevante und/oder lasttragende Anbauteile, wie beispielsweise die hintere Radachse mit den Rädern oder auch ein sogenannter Gurtblock befestigt. Die unmittelbare Befestigung an der Tragwanne führt insgesamt zu einem geringen Gesamtgewicht des Chassis, so dass im Vergleich zu herkömmlichen Chassis Gewichtseinsparungen erzielt werden können. Unter Gurtblock wird hierbei allgemein ein Traggestell verstanden, welches die Sitzbank bzw. Sitze im hinteren Wohnbereich des Reisewohnmobils aufnimmt und an dem die Gurte befestigt sind. Entsprechend den geltenden Sicherheitsbestimmungen (bei 3,5t gelten die verschärften PKW-Bestimmungen, doppelt so hohe Anforderungen) muss ein derartiger Gurtblock pro Sitz für eine Zugkraft von 3,5 t ausgelegt sein. Der Gurtblock ist daher vorzugsweise insgesamt für 3,5 t und vorzugsweise für eine Zugkraft von 7 t ausgebildet.

Darüber hinaus sind zweckdienlicherweise weitere, vorzugsweise alle erforderlichen Trag- oder Befestigungseinheiten für weitere Funktionselemente, wie beispielsweise Gasflaschen, Wassertank, Batterie etc. direkt an der Tragwanne angeordnet und in diese integriert. Im Vergleich zu einem herkömmlichen Fahrgestell werden hierdurch deutliche Gewichtseinsparungen erzielt. Dies betrifft insbesondere den zuvor beschriebenen Gurtblock, der bisher eine aufwendige Unterkonstruktion erforderte, um die erforderlichen Kräfte aufzunehmen zu können. Diese werden jetzt unmittelbar durch eine sinnvolle Ausgestaltung des Tragbauteils auf die Tragwanne übertragen.

Gerade in dieser Gewichtseinsparung ist ein wesentlicher Vorteil des wannenförmigen Konzeptes zu sehen. Insgesamt lässt sich daher - bei der Fahrzeugklasse bis 3,5 t und beispielsweise bei einer Fahrzeuggesamtlänge von etwa 6,5 bis 7 m - im Vergleich zu bisherigen Fahrgestellen eine Gewichtseinsparung von etwa 200 kg erzielen. Dies ermöglicht zugleich die Fahrzeuggesamt-Länge im Vergleich zu bisher üblichen Konzepten zu erhöhen und dennoch innerhalb der angestrebten Gewichtsklasse von 3,5 t zu bleiben. Insgesamt ist das Reisewohnmobil für die Gewichtsklasse 3,5t bis 5,5t bei einer Länge von 6,5 bis 8,5m und insbesondere für die Gewichtsklasse 3,5t bei einer Gesamtlänge von 6,5m bis zu 7,5m ausgelegt. Dies war konzeptbedingt bisher nicht möglich.

Für eine zuverlässige und dauerhaft feste Anbindung der einzelnen Ein- oder Anbauteile sind Tragbauteile, insbesondere Tragbleche in den Faserverbundwerkstoff integriert, also bevorzugt einlaminiert. Diese sind dabei insbesondere als Einlegeteile eingebracht. Grundsätzlich besteht alternativ oder ergänzend hierzu die Möglichkeit, die Wandung zwischen zwei Tragblechen sandwichartig zwischen sich einzuschließen. Ein jeweiliges Tragblech ist dabei vorzugsweise mehrere Millimeter, bsp. 2 bis 3 mm stark und insbesondere aus Metall, bevorzugt aus einem Stahlblech gefertigt.

Alternativ zu einer solchen Hybrid-Ausgestaltung aus einem integrierten metallischen Tragbauteil und dem Faserverbund-Werkstoff wird zur Verstärkung des Faserverbund-Bauteils ein zusätzliches Faserverbund-Teil als Tragbauteil einlaminiert. Hierbei handelt es sich insbesondere um ein CFK-Tragbauteil, an dem dann die Befestigung erfolgt.

Die Tragwanne weist erfindungsgemäß weiterhin im Innenraum zwei Längsholme auf, die sich in Längsrichtung insbesondere über die gesamte Länge der Wanne erstrecken und ebenfalls als Faserverbund-Teile ausgebildet sind und mit der restlichen Tragwanne stoffschlüssig entweder durch Kleben oder bevorzugt direkt durch eine entsprechende Harz-Verbindung stofflich verbunden sind. Die Längsholme sind daher integraler Bestandteil des Monoblocks. Die Längsholme sind dabei hohl und weisen vorzugsweise einen in etwa trapezförmigen Querschnitt auf, verjüngen sich also nach oben. Sie bilden in etwa eine Schottwand und grenzen einen Mittenbereich von zwei äußeren Randbereichen ab. Die Längsholme fluchten dabei vorzugsweise in etwa mit einer Innenseite eines hinteren Radkastens. Durch diese Längsholme, die sich vorzugsweise über die gesamte Höhe der Seitenwandung erstrecken, sind daher beidseitig eines Mitten-Stauraums weitere Stauräume für die Aufnahme beispielsweise von Gasflaschen, Fahrzeugbatterie, Elektro-Kästen, Heizungskomponenten, Klimaanlage etc. angeordnet, die bei Bedarf über Klappen von außen durch die Seitenwandung hindurch zugänglich sind. Alternativ können sie auch von oben über entsprechende Revisionsöffnungen im Boden zugänglich sein. Der Boden stützt sich insbesondere ergänzend auf diesen Längsholm ab. Diese Stauräume weisen eine Innenhöhe von mindestens 350 mm, insbesondere von 380 mm bis 450 mm auf.

Zweckdienlicherweise sind in den Längsholmen die Tragbleche integriert, die sich vorzugsweise allgemein lediglich über eine begrenzte Länge erstrecken. Die Tragbleche sind dabei mit in die Längsholme einlaminiert oder mit diesen oder auch mit der sonstigen Tragwanne durch Kleben großflächig, insbesondere vollflächig verbunden.

Zur Befestigung der Anbauteile und zur Übertragung der entsprechenden Lasten sind zweckdienlicherweise beidseitig eines jeweiligen Längsholms jeweils ein Befestigungselement, insbesondere aus Stahl angeordnet. Dieses ist mit dem Trag blech im Inneren des Längsholms verbunden, insbesondere über eine Schraubverbindung.

Vorzugsweise sind dabei Distanzhülsen zwischen dem Anbauteil und dem Tragblech angeordnet, so dass die von einem Verbindungselement ausgeübte Befestigungskraft nicht auf das Faserverbund-Bauteil übertragen wird. Als Verbindungselemente sind insbesondere Schrauben verwendet. Durch die Anordnung der Distanzhülsen besteht keine Gefahr, dass sich eine derartige Schraubverbindung im Laufe der Zeit löst.

Zur Verbesserung der Tragfähigkeit und Steifigkeit sind dabei die in den Faserverbund-Werkstoff eingebetteten Tragbauteile bevorzugt als umgekantete Tragbleche ausgebildet, weisen daher ein definiertes Querschnittsprofil, beispielsweise L, Z, U, T....-Profil auf.

Zur Befestigung der Anbauteile sind als Befestigungselemente beispielsweise Tragprofile angeordnet, die sich insbesondere großflächig an das Faserverbund-Bauteil anlegen. Komplementär hierzu ist ebenfalls auch das einlaminierte Trägbauteil, insbesondere Tragblech, großflächig ausgebildet, sodass eine flächige Verbindung erzielt ist. Unter großflächig wird hier eine Fläche von mehreren 100 cm² verstanden, insbesondere eine Fläche größer 300 cm².

Für die Befestigung des Gurtblocks an einem der Längsholme sind als Befestigungselemente Tragprofile vorgesehen, die im Querschnitt insbesondere L-förmig ausgebildet sind. Diese definieren eine Befestigungsplattform für den Gurtblock, an der dieser wiederum insbesondere über eine Schraubverbindung befestigt ist.

Zur Befestigung der Radachse sind als Befestigungselemente insbesondere die Originalbefestigungsbleche oder originalgetreue Nachbauten hiervon verwendet, die von dem Serienfahrzeughersteller bzw. dem Hersteller der entsprechenden Fahrzeugachse zur Befestigung an dem üblichen Fahrgestell verwendet werden. Durch diese Maßnahme sind daher die Befestigungspunkte identisch erhalten, so dass sämtliche erforderlichen Anbauteile, wie beispielsweise Federungselemente etc. an der erforderlichen Position befestigt werden können. Dieses originale Befestigungsblech ist an einem einlaminierten Tragblech befestigt.

In zweckdienlicher Weiterbildung weisen die Längsholme Montageöffnungen mit einer Öffnungsweite von zumindest 15 cm auf, sodass ein Zugriff in den Innenraum der Längsholme ermöglicht ist. Dies dient zum Einen zum Befestigen (Einlaminieren) der Tragbleche im Innenraum der Längsholme. Hierzu werden die Tragbleche über diese Montageöffnungen oder auch über eine stirnseitige Zugänglichkeit der Tragholme in diese eingeführt und anschließend an der gewünschten Position durch einen Laminierprozess mit der Wandung des Längsholmes stoffflüssig verbunden. Ergänzend dienen die Montageöffnungen aber auch zum Verlegung von strangförmigen Komponenten im Inneren der Längsholme. Derartige stangenförmige Komponenten sind daher vorzugsweise auch in diesen Längsholmen platzsparend und geschützt verlegt. Unter stangenförmige Komponenten werden hierbei einerseits Versorgungskomponenten sowohl für fahrwerkspezifische Funktionen als auch für Funktionen des Reisewohnmobils verstanden. Dies sind insbesondere elektrische Versorgungsleitungen, Gasleitungen, Fluidleitungen wie beispielsweise Bremsleitungen, Druckluftleitungen oder auch Wasserleitungen, Heizrohre, etc.

Insbesondere dienen die Längsholme aber auch zur Führung eines Seilzugs für eine Feststellbremse. Hierdurch wird im Vergleich zu herkömmlichen Aufbauten der Vorteil erzielt, dass diese weitgehend vollständig im geschützten Innenraum geführt sind und somit die Gefahr eines Ausfalls durch Verschmutzung oder Frost verringert ist.

In zweckdienlicher Weiterbildung sind zur Befestigung des Chassis am Triebkopf in die Längsholme Lastträger aus Stahl integriert, die über das Chassis in Richtung zum Triebkopf überstehen und an diesem befestigt sind. Die Lastträger sind dabei wiederum möglichst großflächig in die Längsholme einlaminiert, um eine großflächige Lastübertragung zu gewährleisten. Mit ihrem überstehenden Teil werden sie an eine Tragstruktur des Triebkopfes, beispielsweise an einen Stahl-Querträger des Triebkopfes befestigt. Dies erfolgt beispielsweise durch Schweißen oder auch durch eine Schraubverbindung.

Der Lastträger weist dabei vorzugsweise ein über das Chassis überstehendes Stahlprofil auf, welches mit dem in die Längsholme integrierten Teil des Lastträgers verbunden ist, beispielsweise über eine Schraubverbindung. Dieses Stahlprofil 60 ist dabei beispielsweise nach Art eines Adapter-Bauteils ausgebildet, um das Faserverbund-Chassis an unterschiedliche Triebköpfe oder auch an variierende Anbausituationen des Triebkopfes anpassen zu können.

Bei der Ausführungsvariante, bei der das Faserverbund-Bauteil als vollständig durchgehende Bodengruppe ausgebildet ist und sich bis in den Triebkopf hinein erstreckt sind vorzugsweise in ähnlicher Weise wie an der Tragwanne Tragbauteille in den Faserverbund-Werkstoff integriert, an denen dann die lasttragenden Anbauteile wie beispielsweise Vorderachse, Motorblockaufhängung und / oder ein Fahrgastgestell zur Erhöhung der Sitzposition etc. befestigt sind.

Zweckdienlicherweise ist zur Erhöhung der Steifigkeit zumindest eine die Längsholme verbindende Querschottwand ausgebildet, welche insbesondere ebenfalls aus Faserverbundwerkstoff besteht und integraler Bestandteil des Monoblocks ist. Insbesondere sind hierbei zwei in Längsrichtung voneinander beabstandete Querschottwände vorgesehen, die zwischen sich einen Hauptinnenraum begrenzen. Eine vordere Querschottwand ist dabei im Bereich des Triebkopfes angeordnet und eine rückwärtige Querschottwand im Bereich der hinteren Radachse. Durch diese Querschottwände erfolgt eine zusätzliche Versteifung gerade in diesen kritischen Bereichen. Die Querschottwände sind dabei als einfache plattenförmige Gebilde ähnlich der Seitenwandung ausgebildet. Alternativ sind sie ähnlich wie die Längsholme als insbesondere Trapez-förmige Hohlprofile ausgebildet. Sie weisen weiterhin vorzugsweise die gleiche Höhe wie die Längsholme bzw. wie Seitenwandung auf. Sie weisen dabei beispielsweise ebenso wie die Längsholme eine Höhe auf, die der Innenhöhe der Tragwanne entspricht.

In die Seitenwandung ist in zweckdienlicher Ausgestaltung zumindest ein Funktionselement integriert, von diesem also unterbrochen bzw. durch dieses weitergeführt. Vorzugsweise ist sie ansonsten vollständig umlaufend ausgebildet. Das Funktionselement ist insbesondere eine Einstiegsstufe bzw. Einstiegstreppe. Alternativ oder ergänzend ist ein derartiges Funktionselement auch ein Kasten zur Aufnahme von Versorgungseinheiten, insbesondere von Gasflaschen, die seitlich von außen über eine Tür verschließbar zugänglich sind.

Diese Funktionselemente sind dabei zweckdienlicherweise als Kastenelemente, insbesondere als vorgefertigte Kastenelemente in die Seitenwandung integriert und mit dieser verbunden. Hierdurch wird also die Seitenwandung quasi durch die Funktionselemente weitergeführt, sodass eine hohe Tragfähigkeit erhalten bleibt. Diese Kastenelemente werden beispielsweise durch einen Laminierprozess mit der Seitenwandung und / oder dem Unterboden der Tragwanne verbunden. Im Falle des Kastenelements für die Gasflaschen weist dieser eine die Seitenwandung übersteigende Höhe auf, um eine ausreichende Innenhöhe zur Aufnahme von Gasflaschen bereitzustellen. Demgegenüber weist das Kastenelement für die Einstiegsstufe eine der Seitenwandungen entsprechende Höhe auf.

Alternativ zu dem Einkleben oder Einlaminieren vorgefertigter Kastenelemente werden diese zweckdienlicherweise unmittelbar in die Tragwanne beim Herstellen der Tragwanne integriert. Die entsprechenden Funktionselemente sind bereits im Grundwerkzeug für die Herstellung der Tragwanne integriert. Dies ist insbesondere dann von Vorteil, wenn feste, vorgegebene Geometrien in größerer Stückzahl gefertigt werden. Bei der Fertigung von unterschiedlichen Modellvarianten beispielsweise für unterschiedliche Reisewohnmobilhersteller kann dabei die separate Herstellung von Kastenelementen von Vorteil sein. In diesem Fall wird dann die zunächst durchgehend gefertigte Seitenwandung an den gewünschten Stellen, an denen die Funktionselemente integriert werden sollen, aufgeschnitten und es wird das Kastenelement integriert.

Weiterhin weist die Seitenwandung in ihrem rückwärtigen Bereich in zweckdienlicher Ausgestaltung eine Öffnung auf, über die im endmontierten Zustand des Reisewohnmobils beispielsweise Ventile oder andere für das Reisewohnmobil wichtige Funktionselemente zugänglich sind. Insbesondere handelt es sich bei diesem Ventil um ein Ablassventil für den Abwassertank und gegebenenfalls auch für den Frischwassertank. Diese Wassertanks sind dabei geschützt im Innenraum der Tragwanne, insbesondere im Hauptinnenraum angeordnet. Durch die Integration der Ventile im Innenraum der Tragwanne sind die Ventile daher frostgeschützt. Ein sich an die Ventile anschließendes Auslaufrohr, welches sich in den Außenraum erstreckt, läuft nach Verschließen des Ventils leer, sodass ein Einfrieren der Flüssigkeit im Ablaufrohr ausgeschlossen ist. Diese Ventile oder weitere Steuereinheiten sind in alternativen Ausgestaltungen auch über die Revisionsöffnungen im Wohnraumboden oder auch durch entsprechende Öffnungen in der Seitenwandung der Tragwanne zugänglich.

In bevorzugten Weiterbildungen weist der Boden zum Wohnraum hin verschließbare Öffnungen auf, die wahlweise als Revisionsöffnungen oder auch als Staufachöffnungen ausgebildet sind.

An das eigentliche wannenförmige Tragbauteil schließt sich rückseitig ein insbesondere abgesenkter Tragboden an, welcher insbesondere einstückig und zum Monoblock gehörig ausgebildet ist. Tragbauteil und Tragboden bilden daher ein gemeinsames Faserverbund-Bauteil. Der Tragboden erstreckt sich über die hintere Achse hinaus und bildet üblicherweise einen Boden für eine Garage etc.

Weiterhin ist vorgesehen, dass unmittelbar am Tragbauteil, insbesondere an dem abgesenkten Tragboden eine Anhängerkupplung befestigt ist. Um die entsprechenden Lasten aufzunehmen sind vorzugsweise in den Tragboden lasttragende Längsstreben aus Stahl integriert. Ergänzend ist zweckdienlicherweise endseitig am Tragboden eine Querstrebe integriert, an die letztendlich die Anhängerkupplung befestigt ist. Die Streben sind dabei wiederum möglichst großflächig in den Faserverbund-Werkstoff einlaminiert. Die Längs- und Querstreben bestehen vorzugweise aus Metall, beispielsweise aus Aluminium und insbesondere aus Stahl und bestehen in alternativen Ausführungsvarianten aus Faserverbund-Bauteilen.

Die Aufgabe wird erfindungsgemäß weiterhin gelöst durch ein Chassis für ein solches Fahrgestell sowie durch eine Werkzeugform zur Herstellung eines derartigen Chassis. Für die kostengünstige Herstellung von verschiedenen Längenvarianten des Fahrgestells ist die Werkzeugform zweckdienlicherweise teleskopartig ausziehbar. Dabei ist insbesondere vorgesehen, dass für die Ausziehbarkeit Trennebenen vorgesehen sind. Die erste Trennebene befindet sich hierbei zwischen Gurtblock und Radachse, insbesondere direkt vor der Hinterradachse (vor den Radkästen), so dass unterschiedliche Radstände ausgebildet werden können. Die Länge des Hauptinnenraums zwischen den beiden Querschottwänden ist daher variierbar. Eine zweite Trennebene befindet sich bei Bedarf nach der Radachse am Beginn der Heckabsenkung, so dass insbesondere der abgesenkte Tragboden in unterschiedlichen Längenvarianten ausgebildet werden kann.

Ein Ausführungsbeispiel der Erfindung wird nachfolgend anhand der Figuren erläutert. Diese zeigen jeweils in schematischen und teilweise vereinfachten Darstellungen:
- Figur 1: eine Seitenansicht eines Reisewohnmobils,
- Figur 2: eine Seitenansicht der gegenüberliegenden Seite des Reisewohnmobils gemäß Figur 1,
- Figur 3: eine Ansicht auf die Unterseite des Reisewohnmobils,
- Figur 4: eine Seitenansicht des Reisewohnmobils mit Triebkopf und daran befestigtem Chassis ohne Aufbau,
- Figur 5: eine Rückansicht des Reisewohnmobils ohne Aufbau gemäß Figur 4,
- Figur 6: eine Seitenansicht der gegenüberliegenden Seite der in Figur 4 dargestellten Seite des Reisewohnmobils ohne Aufbau,
- Figur 7: eine ausschnittsweise Aufsicht auf das Chassis gemäß den Figuren 4 bis 6 mit eine Bodenplatte, die eine Tragwanne überspannt,
- Figur 8: eine Aufsicht auf das Chassis gemäß den Figuren 4 bis 6, wobei jedoch im Unterschied zur Figur 7 die Bodenplatte nicht dargestellt ist und somit ein Blick in den Innenraum der Tragwanne freigegeben ist,
- Figur 9: eine ausschnittsweise seitliche Ansicht nach Art einer Schnittansicht durch das Chassis im Bereich von Längsholmen zur Illustration von Tragblechen aus Stahl, die in den Faserverbundwerkstoff integriert sind,
- Figur 10: eine ausschnittsweise vergrößerte Schnittdarstellung durch einen sich an die Tragwanne anschließenden Tragboden im Bereich einer lasttragenden Stahl-Längsstrebe,
- Figur 11: eine Schnittdarstellung entlang einer Querebene im Bereich zwischen Triebkopf und einem Gurtblock,
- Figur 12: eine vergrößerte Darstellung des mit einem Kreis gekennzeichneten Bereichs in Figur 11,
- Figur 13: eine Schnittdarstellung im Bereich der hinteren Radachse, sowie
- Figur 14: eine vergrößerte Darstellung des mit einem Kreis in Figur 13 gekennzeichneten Bereichs.

In den Figuren sind gleichwirkende Teile mit den gleichen Bezugszeichen dargestellt.

Das in den Figuren dargestellte Reisewohnmobil 2 weist ein Fahrgestell mit einem das Führerhaus bildenden Triebkopf 4 mit einem sich daran anschließenden Chassis 6 auf. Auf das Chassis 6 ist ein Aufbau 8 aufgebracht, in dem der eigentliche Wohnraum des Reisewohnmobils 2 ausgebildet ist. Der Wohnraum erstreckt sich dabei üblicherweise bis in eine durch den Triebkopf 4 gebildete Fahrerzelle. Üblicherweise ist der Fahrer- und Beifahrersitz drehbar ausgebildet, sodass diese in den Wohnraum integriert sind. Zweckdienlicherweise ist ein ebener, bis in das Führerhaus reichender, stufenfrei durchgehender Wohnraumboden ausgebildet.

Bei dem dargestellten Reisewohnmobil 2 handelt es sich insbesondere um ein Fahrzeug der Gewichtsklasse zwischen 3,5 t bis 5,5 t und insbesondere der Gewichtsklasse bis 3,5 t. Das Reisewohnmobil 2 weist dabei eine Gesamtlänge von 6,5 m bis etwa 7,4 m auf.

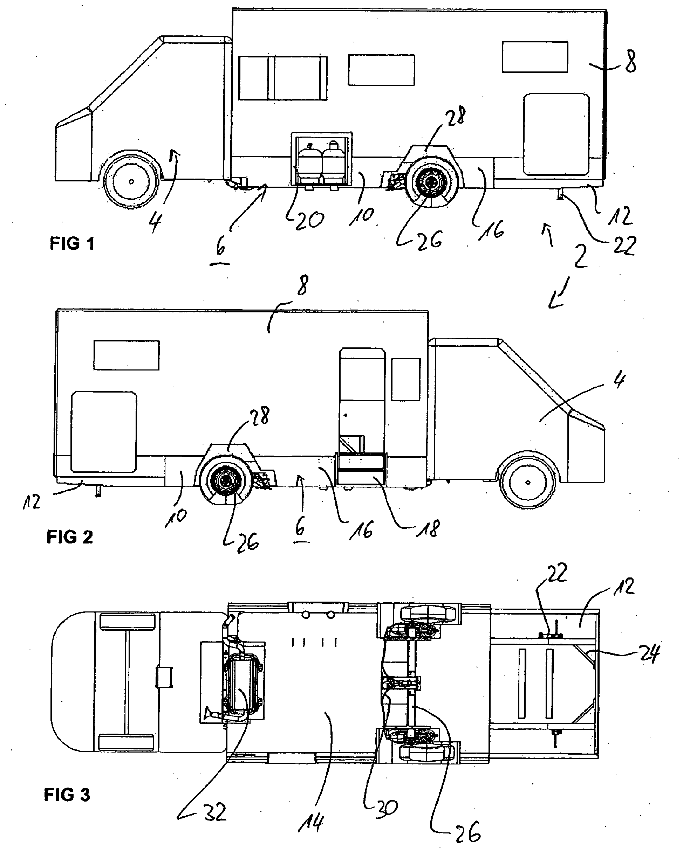

Das am Triebkopf 4 befestigte Chassis 6 weist als Hauptteil eine Tragwanne 10 sowie einen sich hieran rückseitig anschließenden abgesenkten Tragboden 12 auf. Die Tragwanne sowie der Tragboden 12 bilden ein gemeinsames monolithisches und als Monoblock bezeichnetes Bauteil aus einem Faserverbund-Werkstoff, insbesondere aus einem kohlfaserverstärkten Kunststoff. Die Tragwanne 10 weist dabei einen Unterboden 14 auf, welcher zugleich einen Unterboden des Fahrzeuges bildet. Neben dem Unterboden 14 weist die Tragwanne 10 eine umlaufende Seitenwandung 16 auf. In die Seitenwandung 16 sind Funktionselemente als vorgefertigte Kastenelemente integriert, nämlich einerseits eine treppenartige Einstiegsstufe 18 sowie ein Gasflaschenkasten 20. Beide Funktionselemente sind als vorgefertigte Kästen in entsprechende Ausparungen in der Seitenwandung 16 eingesetzt und insbesondere mit dem Unterboden 14 und / oder der Seitenwandung 16 vorzugsweise stoffschlüssig durch einen Laminierprozess verbunden. Diese Funktionselemente 18, 20 selbst sind vorzugsweise ebenfalls aus einem Faserverbund-Werkstoff hergestellt. In den Figuren 1 und 2 ist das Reisewohnmobil 2 ohne Klappen und Türen dargestellt. Im endgefertigten Zustand ist die Einstiegsstufe 18 von einer Tür verschlossen, die sich also über die Seitenwandung 16 in Vertikalrichtung erstreckt. Der Gasflaschenkasten 20 ist im Endzustand ebenfalls von einer Klappe verschlossen. Wie aus der Ansicht der Figur 1 zu entnehmen ist, weist der Gasflaschenkasten 20 dabei eine größere Höhe als die Seitenwandung 16 auf, um eine ausreichende Innenhöhe für die Gasflaschen aufzuweisen.

Der Aufbau 8 selbst weist mehrere Öffnungen für Fenster, Türen sowie für Heckklappen im Bereich des abgesenkten Tragbodens 12 auf. In diesem Bereich ist üblicherweise eine Garage ausgebildet.

Am Tragboden 12 selbst ist an dessen Unterseite eine Fährzeugstütze 22 befestigt, welche zur Stabilisierung des Reisewohnmobils im Ruhezustand dient. Ergänzend ist heckseitig am Tragboden 12 eine hier nicht näher dargestellte Anhängerkupplung befestigt. Hierzu sind am Tragboden 12 mehrere Stahl-Streben integriert, unter anderem Diagonalstreben 24, wie aus Figur 3 ersichtlich.

Im rückwärtigen Bereich der Tragwanne 10 ist eine hintere Radachse 26 befestigt. Bei dieser handelt es sich um eine übliche Radachse mit Rädern und den entsprechenden erforderlichen Fahrwerks-Komponenten. Hierbei handelt es sich bevorzugt um Originalbauteile des originalen Fahrzeugherstellers des herkömmlichen Fahrgestells mit dem üblicherweise als Leiterrahmen ausgebildeten Chassis 6. Die Reisewohnmobile werden regelmäßig auf Basis derartiger handelsüblicher Fahrgestelle von Nutzfahrzeugen aufgebaut. Im vorliegenden Fall wird daher der sonst übliche Stahl-Leiterrahmen demontiert beziehungsweise erst gar nicht bezogen und durch das Chassis 6 aus Faserverbund-Werkstoff ersetzt. Im Bereich der Räder weist die Tragwanne 10 integrierte Radkästen 28 auf. Diese sind ausreichend groß bemessen, um sämtliche Funktionselemente der Radachse 26, wie beispielsweise Luftfederung etc. aufnehmen zu können. Im Bereich der querverlaufenden Radachse 26 weist der Unterboden 14 eine domartige, die Radkästen 28 verbindende Erhebung auf. Aus Figur 3 ist noch ein Seilzug 30 als eine strangförmige Komponente ersichtlich, welcher für eine Feststellbremse herangezogen wird. Der Seilzug 30 wird von den Rädern in den Innenraum der Tragwanne 10 hineingeführt. Weiterhin ist aus Figur 3 zu erkennen, dass ein Auspuff 32 an der Unterseite im Verbindungsbereich zwischen Tragwanne 10 und Triebkopf 4 angeordnet ist. Hierzu weist die Tragwanne 10 an ihrer Unterseite eine kastenförmige Ausbuchtung auf.

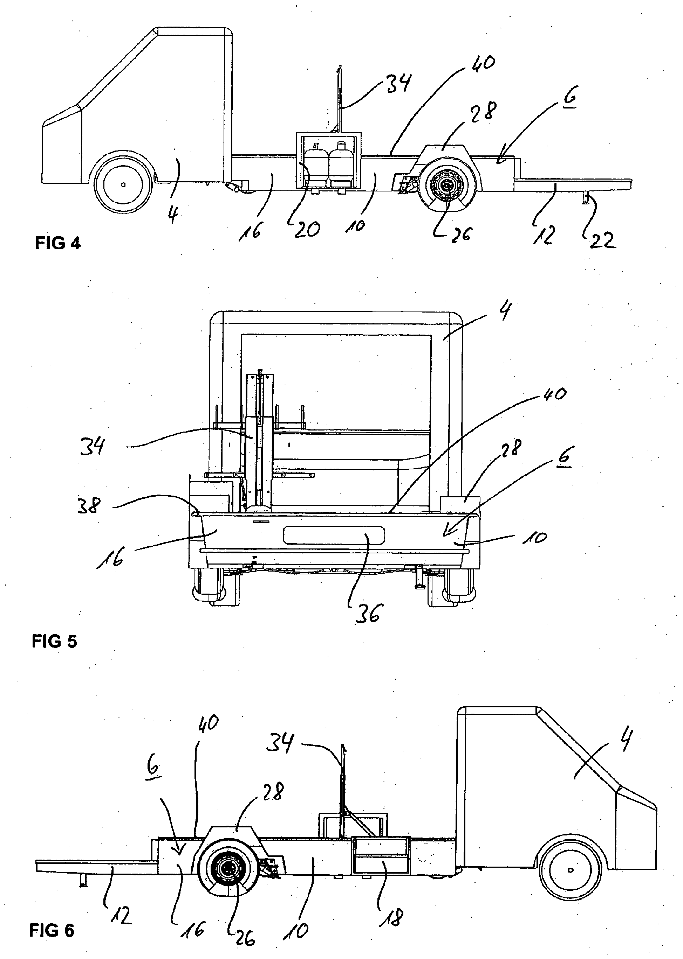

Aus den Figuren 4 bis 6 ist sehr gut der Aufbau des Fahrgestells mit Triebkopf 4 und Chassis 6 ohne den Aufbau 8 zu erkennen. Von besonderer Bedeutung ist hierbei, dass ein Gurtblock 34 an der Tragwanne 10 unmittelbar befestigt ist, und zwar derart, dass die entsprechend den Sicherheitsbestimmungen erforderlichen Lasten sicher von der Tragwanne 10 aufgenommen werden. Der Gurtblock 34 selbst besteht dabei typischerweise aus Stahl-Holmen. Auf diesem Gurtblock 34 wird auch die Rücksitzbank befestigt.

Aus der Rückansicht gemäß Figur 5 ist eine großflächige Öffnung 36 in rückseitigem Stirnwandbereich der Seitenwandung 16 zu erkennen. Dies erlaubt eine Zugänglichkeit zu dem freien Innenraum der Tragwanne 10, insbesondere für die Zugänglichkeit zu Absperrventilen, die im Bereich dieser Öffnung 36 im endgefertigten Zustand angeordnet sind.

Weiterhin ist aus der Figur 5 eine insgesamt in etwa trapezförmige Querschnittsform der Tragwanne 10 zu erkennen, die beim Herstellen ein einfaches Entformen aus der Werkzeugform erlaubt. Weiterhin ist zu erkennen, dass ein oberer umlaufender Rand der Tragwanne 10 nach Art eines seitlich über die Seitenwandung 16 überstehenden Auflageflansches 38 ausgebildet ist. Auf diesem liegt eine vollflächige Bodenplatte auf, die einen Boden 40 bildet. Wie aus Figur 5 weiterhin zu entnehmen ist, steht der Auflageflansch 38 mit einer kleinen Auflagenase zusätzlich über diese Bodenplatte über. An diesem überstehenden Bereich kann die Befestigung beispielsweise der Seitenwände des Aufbaus oder bei Bedarf auch einer Schürze erfolgen.

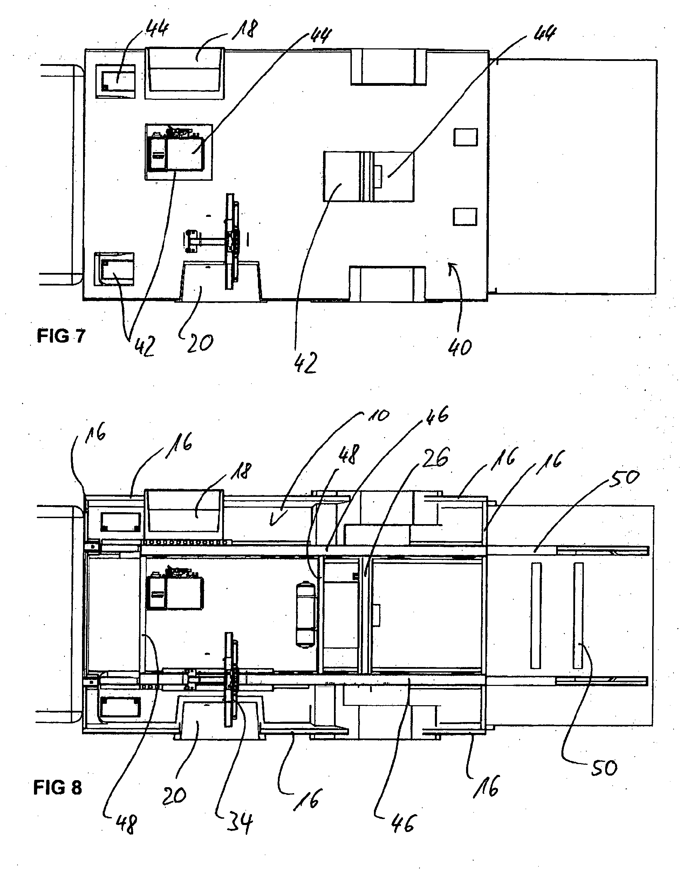

Der Boden 40 - wie insbesondere auch aus der Figur 7 zu entnehmen ist - erstreckt sich als Bodenplatte über die gesamte Länge sowie Breite der Tragwanne 10 und weist lediglich einige Revisionsöffnungen 42 auf, über die der durch die Tragwanne 10 und dem Boden 40 gebildete Zwischen- oder Innenraum zugänglich ist. Die Revisionsöffnungen 42 sind dabei so platziert, dass in diesem Zwischenraum angeordnete Versorgungskomponenten 44 für eine Revision und / einen Austausch zugänglich sind. Bei diesen Versorgungskomponenten 44 handelt es sich insbesondere um Wassertanks für das Abwasser sowie für Frischwasser, um Batterien, um ein Klima- und / oder Heizgerät für die Wohnraumklimatisierung und / oder für die Warmwasseraufbereitung. Vorzugsweise sind sämtliche derartige Versorgungskomponenten 44 im Zwischenraum und damit in der Tragwanne 10 platziert. Im Unterschied zu dem Bereich der Tragwanne 10 ist im Bereich des abgesenkten Tragbodens 12 kein Zwischenraum mehr ausgebildet.

Der Aufbau des Chassis 6 aus Faserverbundwerkstoff ist anhand der Figur 8 gut zu erkennen. Die Tragwanne 10 weist neben der Seitenwandung 16 und dem Unterboden 14 weiterhin zwei einander gegenüberliegende Längsholme 46 sowie weiterhin zusätzlich zwei Querschottwände 48 auf. Die Längsholme 46 unterteilen den Innenraum der Tragwanne 10 in einen zentralen Innenraum und zwei seitliche Rand-Innenräume. Die Längsholme 46 erstrecken sich über die gesamte Länge der Tragwanne 10 zumindest bis zur vorderen Querschottwand 48. Sie fluchten innenseitig mit den Radkästen 28. Die vordere Querschottwand 48 ist dabei in Nähe zum Triebkopf 4 angeordnet und etwa auf der Höhe, auf der die Ausbuchtung für den Auspuff 32 endet. Die rückseitige Querschottwand 48 ist vor der hinteren Radachse 26 angeordnet, insbesondere vor den Radkästen 28 und den entsprechenden nachfolgend noch erläuterten Befestigungskomponenten für die Befestigung der hinteren Radachse 26. Wie aus der Aufsicht der Figur 8 zu entnehmen ist, läuft die Seitenwandung 16 weitgehend vollständig um den gesamten Umfang der Tragwanne 10 um. Sie ist im Bereich der Einstiegsstufe 18 unterbrochen, jedoch durch das entsprechende Kastenelement quasi fortgeführt. Gleiches gilt auf der gegenüberliegenden Seite für den Fall des Gasflaschenkastens 20. Weiterhin sind Teilabschnitte der Seitenwandung 16 durch die Radkästen 28 fortgeführt. Zum Tragboden 12 hin ist die Tragwanne 10 durch die rückseitige Stirnwand der Seitenwandung 16 abgegrenzt. Der abgesenkte Tragboden 12 aus dem Faserverbund-Werkstoff ist profiliert ausgebildet und bildet Versteifungsprofile 50 aus, die in Längsrichtung mit den Längsholmen 46 fluchten. Ergänzend sind im Ausführungsbeispiel auch Querprofile ausgebildet.

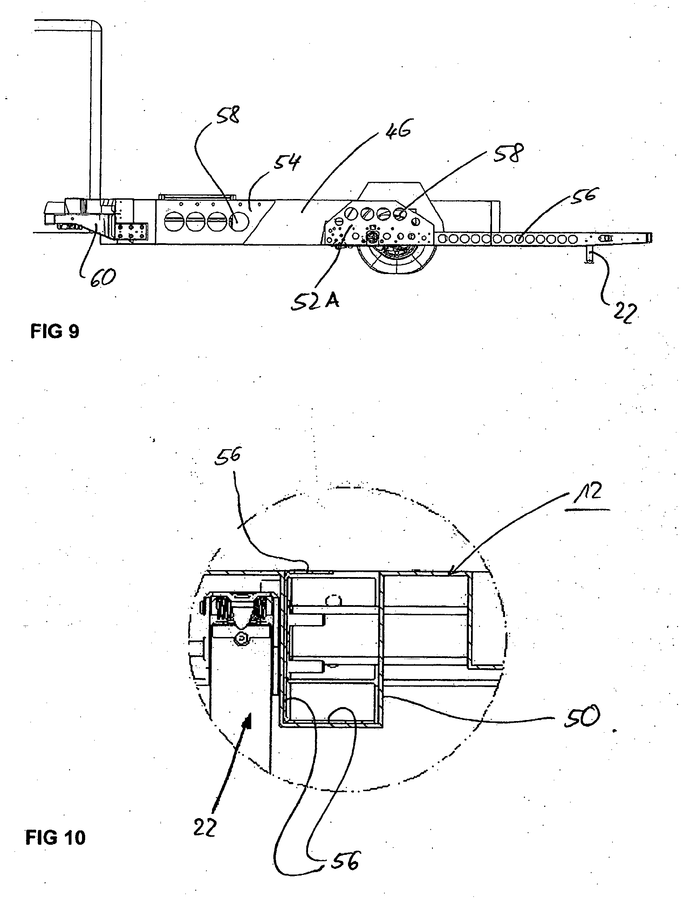

Zur sicheren und zuverlässigen Übertragung von Lasten sind in die Längsholme 46 sowie auch in die Versteifungsprofile 50 im Ausführungsbeispiel lasttragende Elemente, insbesondere aus Stahl integriert, die insbesondere in Figur 9 dargestellt sind. Bei diesen handelt es sich um Stahlbleche oder auch Profile bildende umgekantete Stahlbleche mit einer Stärke von typischerweise 2 mm bis 3 mm. Zur Befestigung der Radachse 26 sind erste Tragbleche 52A, zur Befestigung des Gurtblocks sind zweite Tragbleche 52B, zur Befestigung des Chassis 6 am Triebkopf 4 sind Lastträger 54 und zur Befestigung der nicht näher dargestellten Anhängerkupplung sind Längsstreben 56 integriert. Soweit vorliegend von "integriert" gesprochen wird, so wird hierunter insbesondere eine stoffflüssige Befestigung mit dem monolithischen Faserverbund-Bauteil des Chassis 6 verstanden. Insbesondere werden die Stahlbauteile durch einen zusätzlichen Laminierprozess in den Faserverbund-Werkstoff eingebettet, sodass eine vollflächige Lastübertragung erreicht ist. Der Lastträger 54, das erste Tragblech 52A sowie die Längsstrebe 56 ist sehr gut anhand der Darstellung nach der Figur 9 zu erkennen. Sämtliche diese Komponenten weisen Montageöffnungen 58 auf, sodass sie entweder für das vorgesehene Einlaminieren dieser Bauteile von dem Monteur durchgriffen werden können und / oder dass durch diese Komponenten beispielsweise auch Versorgungsleitungen etc. geführt werden können. Die Tragbleche 52A, B sowie der Lastträger 54 erstrecken sich dabei über die gesamte freie Innenhöhe der Längsholme 46 und schmiegen sich an deren Innenwandung an.

Zum Triebkopf 4 hin schließt sich an den Lastträger 54 ein Stahlprofil 60 an, welches insbesondere als Teil des Lastträgers 54 angesehen werden kann. Dieses Stahlprofil 60 ist über Schrauben an dem Tragblech des Lastträgers 54 befestigt und erstreckt sich bis in den Triebkopf 4 hinein und ist dort mit einem entsprechenden Querträger des Triebkopfes 4 verbunden.

Anhand der Figur 10 ist im Detail die Befestigung der Längsstrebe 56 im Faserverbundwerkstoff des abgesenkten Tragbodens 12 dargestellt. Zunächst ist gut die Profilierung des Faserverbundwerkstoffes des Tragbodens 12 zu entnehmen, welcher also insbesondere ein etwa U-förmiges Versteifungsprofil 50 ausbildet. In dieses ist als Längsstrebe 56 ein umgekantetes Tragblech passgenau eingelegt, welches im Ausführungsbeispiel als C-Profil ausgebildet ist. Dieses ist zusätzlich noch - in hier nicht näher dargestellter Weise - durch eine zusätzliche Laminatschicht überzogen und damit mit dem Faserverbundwerkstoff des Tragbodens 12 verbunden und damit in diesem eingebettet. Durch die Montageöffnungen 58 erfolgt hierbei eine sichere Einbettung. Die Fahrzeugstütze 22 ist zweckdienlicherweise an der Längsstrebe 56 befestigt. Alternativ ist sie direkt auch an dem Faserverbund-Bauteil des Tragbodens 12 befestigt.

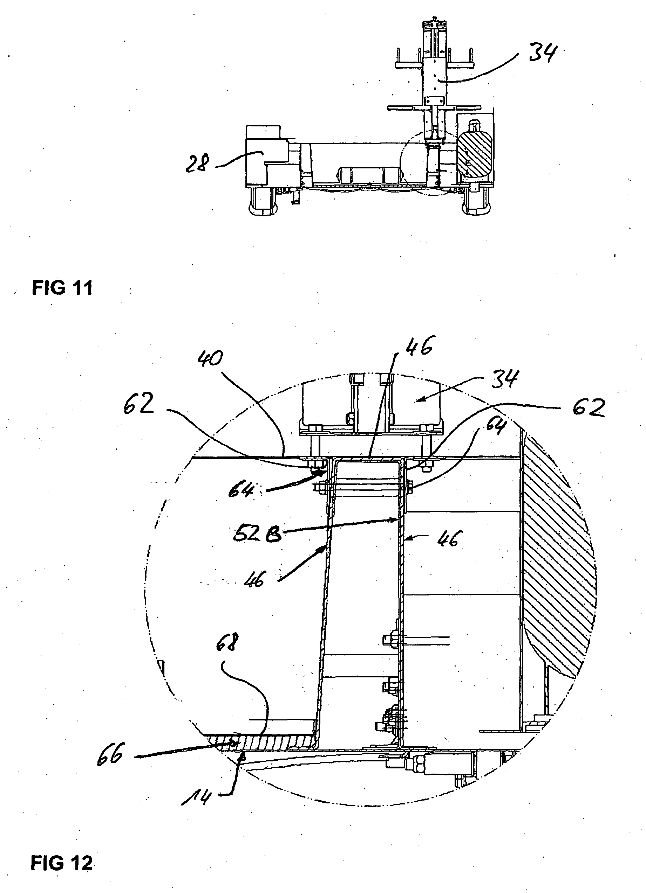

Anhand der Figur 12 ist die Befestigung des Gurtblocks 34 dargestellt. Zunächst ist die in etwa trapezförmige Ausgestaltung des als Hohlprofil ausgebildeten Längsholms 46 gut zu erkennen. Im Innenraum des Längsholm 46 ist das zweite Tragblech 52B ebenfalls als umgekantetes Stahl-Profil angeordnet, welches sich direkt an die Innenwandung des Längsholms 46 anschmiegt und mit diesem - hier wiederum in nicht näher dargestellter Weise - durch Einlaminieren stoffschlüssig verbunden ist. Im oberen Bereich des Längsholms 46 sind beidseitig an der Außenseite jeweils Tragprofile 62 (L-Profile) aus Stahl befestigt, welche eine Tragstruktur für die Befestigung des Gurtblocks 34 bilden. Die Wandung des Längsholms 26 ist daher sandwichartig zwischen dem zweiten Tragblech 52B und diesen Tragprofilen 62 angeordnet. Die Tragprofile 62 sind hierbei über Schrauben 64 an den zweiten Tragblechen 52B befestigt. Um keine Spannungen auf den Faserverbund-Werkstoff zu übertragen ist die Wandung des Längsholms 46 jeweils mit (Stahl-)Distanzhülsen durchsetzt, an denen sich die Stahlteile, nämlich das zweite Tragblech 52B, das Tragprofil 62 kraftübertragend abstützen.

Aus der Figur 12 ist noch ein weiterer wesentlicher Aspekt der Tragwanne 10 zu entnehmen, nämlich eine Isolierung 66, sodass das Reisewohnmobil 2 auch winterfest ist. Im Bereich des Unterbodens 14 ist auf die Wandung des Faserverbund-Werkstoffs eine Isolierung 66 angebracht, die mehrere Zentimeter dick ist. Diese ist schließlich wieder von einer Innenhaut 68 vorzugsweise ebenfalls aus Faserverbund-Werkstoff überdeckt.

Ergänzend ist in bevorzugter Ausgestaltung in den Unterboden 14 in hier nicht näher dargestellter Weise ein metallisches Befestigungsblech eingebracht, vorzugsweise wiederum durch stoffflüssige Verbindung mit dem Faserverbund-Werkstoff beispielsweise durch Einlaminieren oder Kleben. Auf dieses Befestigungsblech werden dann die Versorgungskomponenten 44 befestigt. Dies erfolgt beispielsweise durch einfache Blechschrauben. Vorzugsweise ist der gesamte Innenraum, innerhalb dessen die vor Frost zu schützenden Versorgungskomponenten 44 angeordnet sind ausreichend isoliert. Dies betrifft insbesondere den zentralen Innenraum zwischen den beiden Längsholmen 46. Die Isolierung 66 ist in diesem Bereich insbesondere im Unterboden 14 integriert. Durch die hohle Ausführung der Längsholme 46 ist bereits eine gute seitliche Isolierung ausgebildet. Ergänzend sind bevorzugt auch Teile dieser Längsholme 46 oder auch der Seitenwandung 16 mit der Isolierung versehen sein.

Bei dem Boden 40 handelt es sich vorzugsweise ebenfalls um einen isolierten Boden, sodass der durch diesen Boden gebildeten Wohnraumboden isoliert ist. Die den Boden 40 bildende Bodenplatte ist hierbei durch einen Mehrschichtaufbaü gebildet, bevorzugt aus einer Aluminiumplatte mit einer entsprechenden Isolierung. Bevorzugt weist der Boden 40 einen Sandwichaufbau, insbesondere mit zwei Aluminiumplatten mit einer Isolations-Zwischenlage auf.

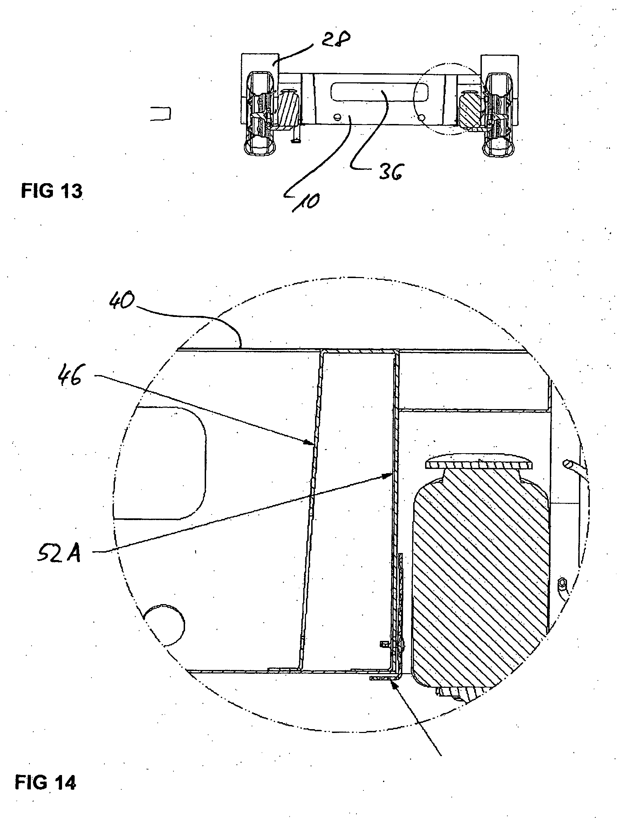

Aus der Figur 14 ist ergänzend noch die Befestigung des ersten Tragblechs 42A im Bereich der hinteren Radachse 26 zu erkennen. Auch hier ist dieses als ein umgekantetes Blech, vorliegend nach Art eines L-Profils an der Innenwandung des Längsholms 46 befestigt. Von außen ist wiederum ein Tragprofil 62 befestigt, an welchem letztendlich die eigentliche Radachse und die weiteren Komponenten befestigt sind. Die Befestigung dieses Tragprofils 62 mit dem ersten Tragblech 52A erfolgt wiederum über Schrauben 64 und Distanzhülsen. Das Tragprofil 62 ist in diesem Fall vorzugsweise ein Original-Bauteil des Herstellers des Fahrgestells, sodass keine Kompatibilitätsprobleme mit der Befestigung der Radachse bestehen. Wie insbesondere in Verbindung mit Figur 9 zu erkennen ist, ist das erste Tragblech 52A sehr großflächig ausgebildet und erstreckt sich beispielsweise in Längsrichtung über etwa einen halben Meter oder auch mehr und über die gesamte Höhe des Längsholms 46, die im Bereich von nahezu 380 mm bis 450 mm, also nahezu im Bereich der freien Innenhöhe der Tragwanne liegt.

**Bezugszeichenliste**

| | | | |
|---|---|---|---|
| 2 | Reisewohnmobil | 38 | Auflageflansch |
| 4 | Triebkopf | 40 | Boden |
| 6 | Chassis | 42 | Revisionsöffnung |
| 8 | Aufbau | 44 | Versorgungskomponente |
| 10 | Tragwanne | 46 | Längsholm |
| 12 | Tragboden | 48 | Querschottwand |
| 14 | Unterboden | 50 | Versteifungsprofil |
| 16 | Seitenwandung | 52A | erstes Tragblech |
| 18 | Einstiegsstufe | 52B | zweites Tragblech |
| 20 | Gasflaschenkasten | 54 | Lastträger |
| 22 | Fahrzeugstütze | 56 | Längsstrebe |
| 24 | Diagonalstrebe | 58 | Montageöffnung |
| 26 | Hintere Radachse | 60 | Stahlprofil |
| 28 | Radkasten | 62 | Tragprofil |
| 30 | Seilzug | 64 | Schrauben |
| 32 | Auspuff | 66 | Isolierung |
| 34 | Gurtblock | 68 | Innenhaut |
| 36 | Öffnung | | |

## Patentansprüche

1. Fahrgestell eines Reisewohnmobils (2) oder ähnlicher Fahrzeuge mit einem Triebkopf (4) und einem daran anschließenden Chassis (6), auf dem beim endgefertigten Fahrzeug (2) ein Aufbau (8) aufgebaut ist, wobei
das Chassis (6) als tragende Struktur eine Tragwanne (10) mit einem Unterboden (14) und einer umlaufenden Seitenwandung (16) ausbildet und der Innenraum der Tragwanne (10) als Stauraum für die Anordnung von Versorgungskomponenten (44), wie Wassertanks, Batterien etc. ausgebildet ist, und dass die Tragwanne (10) zur Ausbildung eines Bodens (40) von einer Bodenplatte überspannt ist, **dadurch gekennzeichnet, dass** die Tragwanne (10) in ihrem Innenraum zwei integrierte Längsholme (46) aus Faserverbundwerkstoff aufweist, wobei die Längsholme (46) jeweils eine Schottwand bilden und einen Mittenbereich von zwei äußeren Randbereichen abgrenzen, so dass beidseitig eines Mittenstauraums weitere Stauräume angeordnet sind, und der Mittenstauraum von oben über Revisionsöffnungen (42) und die weiteren Stauräume über Klappen von außen durch die Seitenwandung hindurch oder von oben über Revisionsöffnungen (42) im Boden zugänglich sind, und wobei die Stauräume eine Innenhöhe von zumindest 350mm aufweisen.

2. Fahrgestell nach Anspruch 1,
**dadurch gekennzeichnet,**
**dass** das Chassis (6) als ein Monoblock aus einem Faserverbundwerkstoff ausgebildet ist.

3. Fahrgestell nach einem der vorhergehenden Ansprüche,
**dadurch gekennzeichnet,**
**dass** die Tragwanne (10) ohne weiteren Zwischenboden von dem Boden (40) insbesondere freitragend überspannt ist, der einen Wohnraumboden des Reisewohnmobils (2) festlegt.

4. Fahrgestell nach einem der vorhergehenden Ansprüche,
**dadurch gekennzeichnet,**
**dass** der Boden (40) als Sandwichboden mit einer Isolierung ausgebildet ist.

5. Fahrgestell nach einem der vorhergehenden Ansprüche,
**dadurch gekennzeichnet,**
**dass** die Längsholme (46) etwa mit einer Innenseite von Radkästen (28) fluchten.

6. Fahrgestell nach einem der vorhergehenden Ansprüche,
**dadurch gekennzeichnet,**
**dass** an der Tragwanne (10) sicherheitsrelevante oder lastragende Anbauteile, wie ein Gurtblock (34) und / oder eine Radachse (26) befestigt sind.

7. Fahrgestell nach Anspruch 5 und 6,
**dadurch gekennzeichnet,**
**dass** in die Längsholme (46) zur Befestigung der Anbauteile (26, 34) insbesondere als Tragbleche (52A, 52B) ausgebildete Tragbauteile einlaminiert sind, an denen die Anbauteile (26, 34) über Verbindungselemente, insbesondere Schrauben (64) lasttragend befestigt sind.

8. Fahrgestell nach einem der Ansprüche 5 bis 7,
**dadurch gekennzeichnet,**
**dass** die Längsholme (46) Montageöffnungen (58) mit einer Öffnungsweite von zumindest 15 cm aufweisen, so dass ein Zugriff in den Innenraum der Längsholme (46) ermöglicht ist.

9. Fahrgestell nach einem der Ansprüche 5 bis 8,
**dadurch gekennzeichnet,**
**dass** zur Befestigung des Chassis (6) am Triebkopf in die Längsholme (46) Lastträger (54) insbesondere aus Stahl integriert sind, die über das Chassis (6) in Richtung zum Triebkopf (4) überstehen und an diesem befestigt sind.

10. Fahrgestell nach einem der Ansprüche 5 bis 9,
**dadurch gekennzeichnet,**
**dass** zumindest einer die Längsholme (46) verbindende Querschottwand (48) in die tragende Struktur der Tragwanne (10) integriert ist.

11. Fahrgestell nach einem der vorhergehenden Ansprüche,
**dadurch gekennzeichnet,**
**dass** in die Seitenwandung (16) Funktionselemente (18, 20), insbesondere eine Einstiegsstufe (18) sowie ein Gasflaschenkasten (20) integriert sind.

12. Fahrgestell nach einem der vorhergehenden Ansprüche,
**dadurch gekennzeichnet,**
**dass** die Seitenwandung (16) in ihrem rückwärtigen Bereich eine Öffnung (36) aufweist, über die Ventile, beispielsweise für einen Abwassertank, zugänglich sind.

13. Fahrgestell nach einem der vorhergehenden Ansprüche,
**dadurch gekennzeichnet,**
**dass** das Chassis (6) rückwärtig an der Tragwanne (10) anschließend einen gegenüber dem Boden (40) abgesenkten Tragboden (12) aus Faserverbundwerkstoff als Teil des Monoblocks aufweist.

14. Fahrgestell nach einem der vorhergehenden Ansprüche,
**dadurch gekennzeichnet,**
**dass** das es für ein Fahrzeug (2) der Gewichtsklasse 3,5 t bis 5,5 t bei einer Länge von 6,5 m bis 8,5 m und insbesondere für die Gewichtsklasse 3,5 t bei einer Gesamtlänge von 6,5 m bis zu 7,4 m ausgebildet ist.

15. Chassis (2) für ein Fahrgestell nach einem der vorhergehenden Ansprüche,
**dadurch gekennzeichnet,**
**dass** es als tragende Struktur eine Tragwanne (10) mit einem Unterboden (14) und einer umlaufenden Seitenwandung (16) ausbildet und der Innenraum der Tragwanne (10) als Stauraum für die Anordnung von Versorgungskomponenten (44), wie Wassertanks, Gasflaschen, Batterien etc. ausgebildet ist, und dass die Tragwanne (10) von einem Boden (40) überspannt ist und dass die Tragwanne (10) in ihrem Innenraum zwei integrierte Längsholme (46) aus Faserverbundwerkstoff aufweist, wobei die Längsholme (46) jeweils eine Schottwand bilden und einen Mittenbereich von zwei äußeren Randbereichen abgrenzen, so dass beidseitig eines Mittenstauraums weitere Stauräume angeordnet sind, und der Mittenstauraum von oben über Revisionsöffnungen (42) und die weiteren Stauräume über Klappen von außen durch die Seitenwandung hindurch oder von oben über Revisionsöffnungen (42) im Boden zugänglich sind, und wobei die Stauräume eine Innenhöhe von zumindest 350mm aufweisen.

## Claims

1. Chassis frame of a camper van (2) or of similar vehicles having a driving cab (4) and a thereto connected chassis (6) on which, in the case of the finished vehicle (2), a body (8) is constructed, wherein
the chassis (6), as a carrying structure, forms a carrying tank (10) with an underfloor (14) and a surrounding side wall (16) and the interior of the carrying tank (10) is formed as a storage space for the arrangement of supply components (44) such as water tanks, batteries, etc., and the carrying tank (10) is spanned by a base plate for forming a base (40), **characterised in that**, in its interior, the carrying tank (10) has two integrated longitudinal columns (46) made from fibre composite material, wherein each of the longitudinal columns (46) forms a bulkhead wall and delimits a centre region from two exterior edge regions, so that further storage spaces are arranged on both sides of a central storage space, and the central storage space is accessible from above via inspection openings (42) and the further storage spaces are accessible via flaps from the outside through the side wall or from above via inspection openings (42) in the base, and wherein the storage spaces have an interior height of at least 350 mm.

2. Chassis frame according to claim 1,
**characterised in that**
the chassis (6) is formed as a monoblock made from a fibre composite material.

3. Chassis frame according to one of the preceding claims,
**characterised in that**
the carrying tank (10) is spanned by the base (40), without additional intermediate bases, in particular in a self-supporting manner, said base (40) defining a living space floor of the camper van (2).

4. Chassis frame according to one of the preceding claims,
**characterised in that**
the base (40) is formed as a sandwich base with insulation.

5. Chassis frame according to one of the preceding claims,
**characterised in that**
the longitudinal columns (46) are approximately aligned with an interior side of wheel houses (28).

6. Chassis frame according to one of the preceding claims,
**characterised in that**
safety-related or load bearing attachment parts, such as a seat belt system (34) and /or a wheel axle (26) are attached to the carrying tank (10).

7. Chassis frame according to claim 5 and 6,
**characterised in that**
bearing components formed in particular as bearing plates (52A, 52B) are laminated into the longitudinal columns (46) for attaching the attachment parts (26, 34), to which bearing components the attachment parts (26, 34) are attached in a load bearing manner via connecting elements, in particular screws (64).

8. Chassis frame according to one of the claims 5 to 7,
**characterised in that**
the longitudinal columns (46) have assembly openings (58) with an opening width of at least 15cm, such that access to the interior of the longitudinal columns (46) is made possible.

9. Chassis frame according to one of the claims 5 to 8,
**characterised in that**
load carriers (54), in particular made of steel, are integrated into the longitudinal columns (46) for attaching the chassis (6) to the driving cab, said load carriers (54) protruding beyond the chassis (6) in the direction of the driving cab (4), and being attached thereto.

10. Chassis frame according to one of the claims 5 to 9,
**characterised in that**
at least one transverse bulkhead wall (48) connecting the longitudinal columns (46) is integrated into the carrying structure of the carrying tank (10).

11. Chassis frame according to one of the preceding claims,
**characterised in that**
functional components (18, 20) are integrated into the side wall (16), in particular an entry step (18) and a gas cylinder housing (20).

12. Chassis frame according to one of the preceding claims,
**characterised in that**
the side wall (16) has an opening (36) in its rear region, via which valves, for example for a waste water tank, are accessible.

13. Chassis frame according to one of the preceding claims,
**characterised in that**
the chassis (6) has a carrying base (12) made from fibre composite material as a part of the monoblock connected to the rear of the carrying tank (10) and lowered relative to the base (40).

14. Chassis frame according to one of the preceding claims,
**characterised in that**
it is formed for a vehicle (2) of the weight class 3.5 t to 5.5 t with a length of 6.5m to 8.5m, and is formed, in particular, for the weight class 3.5 t with a total length of 6.5m up to 7.4m.

15. Chassis (2) for a chassis frame according to one of the preceding claims,
**characterised in that**
as a carrying structure, it forms a carrying tank (10) with an underfloor (14) and a surrounding side wall (16) and the interior of the carrying tank (10) is formed as a storage space for the arrangement of supply components (44) such as water tanks, gas cylinders, batteries, etc., and the carrying tank (10) is spanned by a base (40) and that the carrying tank (10), in its interior, has two integrated longitudinal columns (46) made from fibre composite material, the longitudinal columns (46) each forming a bulkhead and delimiting a centre region from two exterior edge regions, so that further storage spaces are arranged on both sides of a central storage space, and the central storage space is accessible from above via inspection openings (42) and the further storage spaces are accessible via flaps from the outside through the side wall or from above via inspection openings (42) in the base, and wherein the storage spaces have an interior height of at least 350 mm.

## Revendications

1. Train de roulement d'un véhicule de loisirs du type camping-car (2) ou de véhicules similaires, comprenant une partie avant motrice (4) et un châssis (6) s'y raccordant, sur lequel est montée une superstructure (8) lorsque le véhicule (2) est achevé, le châssis (6) formant en tant que structure portante, un carter porteur (10) avec un fond inférieur (14) et une paroi latérale périphérique (16), et l'espace intérieur du carter porteur (10) étant réalisé en tant qu'espace de stockage pour l'agencement de composants d'alimentation (44) tels que des réservoirs d'eau, des batteries etc., et le carter porteur (10) étant surmonté d'une plaque de plancher pour former un plancher (40),
**caractérisé en ce**
**que** le carter porteur (10) présente dans son espace intérieur deux longerons (46) intégrés en un matériau composite renforcé de fibres, les longerons (46) formant chacun une paroi séparatrice et délimitant une zone centrale de deux zones périphérique extérieures, de manière que d'autres espaces de stockage sont disposés de part et d'autre d'un espace de stockage central, et l'espace de stockage central est accessible par le haut par des ouvertures de révision (42) et les autres espaces de stockage sont accessibles par des clapets de l'extérieur à travers la paroi latérale ou par le haut par des ouvertures de révision (42) dans le plancher, et les espaces de stockage ayant une hauteur intérieure d'au moins 350 mm.

2. Train de roulement selon la revendication 1,
**caractérisé en ce**
**que** le châssis (6) est réalisé sous la forme d'un monobloc en un matériau composite renforcé de fibres.

3. Train de roulement selon l'une des revendications précédentes,
**caractérisé en ce**
**que** le carter porteur (10) est surmonté, notamment de manière autoportante libre, sans autre plancher intermédiaire, par le plancher (40) qui définit un plancher d'espace habitable du camping-car (2).

4. Train de roulement selon l'une des revendications précédentes,
**caractérisé en ce**
**que** le plancher (40) est réalisé sous forme de plancher à structure en sandwich, avec une isolation.

5. Train de roulement selon l'une des revendications précédentes,
**caractérisé en ce**
**que** les longerons (46) sont alignés sensiblement avec le côté intérieur de passages de roues (28).

6. Train de roulement selon l'une des revendications précédentes,
**caractérisé en ce**
**que** sur le carter porteur (10) sont fixés des composants rapportés relevant de la sécurité ou supportant des charges, comme un bloc d'ancrage de ceinture de sécurité (34) et/ou un essieu de roues (26).

7. Train de roulement selon la revendication 5 ou la revendication 6,
**caractérisé en ce**
**que** dans les longerons (46) sont intégrées par stratification, pour la fixation des composants rapportés (26, 34), des pièces de support se présentant notamment sous la forme de tôles de support (52A, 52B), sur lesquelles sont fixés, de manière à pouvoir supporter des charges, les composants rapportés (26, 34), par l'intermédiaire d'éléments de liaison, notamment des vis (64).

8. Train de roulement selon l'une des revendications 5 à 7,
**caractérisé en ce**
**que** les longerons (46) présentent des ouvertures de montage (58) avec une dimension d'ouverture d'au moins 15 cm, permettant ainsi un accès à l'espace intérieur des longerons (46).

9. Train de roulement selon l'une des revendications 5 à 8,
**caractérisé en ce**
**que** pour la fixation du châssis (6) à la partie avant motrice, des supports de charge (54), notamment en acier, sont intégrés aux longerons (46) et font saillie du châssis (6) en direction de la partie avant motrice (4), et sont fixés à celle-ci.

10. Train de roulement selon l'une des revendications 5 à 9,
**caractérisé en ce**
**qu'**au moins une paroi séparatrice transversale (48) reliant les longerons (46), est intégrée à la structure portante du carter porteur (10).

11. Train de roulement selon l'une des revendications précédentes,
**caractérisé en ce**
**que** dans la paroi latérale (16) sont intégrés des éléments fonctionnels (18, 20), notamment une marche d'accès (18), ainsi qu'un casier à bouteilles de gaz (20).

12. Train de roulement selon l'une des revendications précédentes,
**caractérisé en ce**
**que** la paroi latérale (16) présente dans sa zone arrière, une ouverture (36) permettant l'accès à des vannes, par exemple pour un réservoir d'eaux usées.

13. Train de roulement selon l'une des revendications précédentes,
**caractérisé en ce**
**que** le châssis (6) présente à l'arrière, se raccordant au carter porteur (10), un plancher porteur (12) en matériau composite renforcé de fibres, abaissé par rapport au plancher (40) et faisant partie du monobloc.

14. Train de roulement selon l'une des revendications précédentes,
**caractérisé en ce**
**qu'**il est configuré pour un véhicule (2) de la classe de tonnage allant de 3,5 t à 5,5 t pour une longueur allant de 6,5 m à 8,5 m, et notamment pour la classe de tonnage de 3,5 t pour une longueur totale allant de 6,5 m jusqu'à 7,4 m.

15. Châssis (2) pour un train de roulement selon l'une des revendications précédentes,
**caractérisé en ce**
**qu'**il forme en tant que structure portante, un carter porteur (10) avec un fond inférieur (14) et une paroi latérale périphérique (16), et l'espace intérieur du carter porteur (10) est réalisé en tant qu'espace de stockage pour l'agencement de composants d'alimentation (44) tels que des réservoirs d'eau, des batteries etc., et que le carter porteur (10) est surmonté d'un plancher (40) et que le carter porteur (10) est formé d'un matériau composite renforcé par des fibres, et le carter porteur (10) est recouvert d'un plancher (40), et le carter porteur (10) présente dans son espace intérieur deux longerons intégrés (46) en matériau composite renforcé par des fibres, les longerons (46) formant chacun une paroi séparatrice et délimitant une zone centrale de deux zones périphérique extérieures, de manière que d'autres espaces de stockage sont disposés de part et d'autre d'un espace de stockage central, et l'espace de stockage central est accessible par le haut par des ouvertures de révision (42) et les autres espaces de stockage sont accessibles par des clapets de l'extérieur à travers la paroi latérale ou par le haut par des ouvertures de révision (42) dans le plancher, et les espaces de stockage ayant une hauteur intérieure d'au moins 350 mm.
